# EUROPEAN PATENT SPECIFICATION

(11) **EP 2 436 999 B1**
(45) Date of publication and mention of the grant of the patent: **09.05.2018**
(21) Application number: 10780304.1
(22) Date of filing: 28.05.2010
(51) Int. Cl.: F24F 11/02, F25B 13/00

(54) **AIR-CONDITIONING DEVICE**
KLIMAANLAGE
DISPOSITIF DE CONDITIONNEMENT D'AIR

(30) Priority: 29.05.2009 JP 2009130114
(43) Date of publication of application: 04.04.2012
(73) Proprietor: Daikin Industries, Ltd., Osaka 530-8323 (JP)
(72) Inventor: SHIMODA, Junichi, Sakai-shi Osaka 591-8511 (JP); KINOSHITA, Hidehiko, Sakai-shi Osaka 591-8511 (JP)
(74) Representative: Hoffmann Eitle
(86) International application number: PCT/JP2010/003612
(87) International publication number: WO 2010/137344

(56) References cited:
- WO-A1-98/36227
- JP-A- H 109 728
- JP-A- 4 013 037
- JP-A- 4 093 540
- JP-A- H0 493 540
- JP-A- H10 205 935
- JP-A- 2004 218 936
- JP-A- 2005 188 863
- JP-A- 2007 292 439
- JP-A- 2009 058 222

## Description

### TECHNICAL FIELD

The present invention relates to an air conditioner.

### BACKGROUND ART

In executing a heating operation, the air conditioners are normally configured to execute a control of inhibiting degradation in heating performance due to frost attachment onto the outdoor heat exchangers thereof immediately before the start of a defrosting operation. For example, JP-A-S62-0690704 describes a control of preventing reduction in the rotation speed of an outdoor fan due to increase in ventilation resistance. Specifically, a control unit is herein configured to increase voltage to be inputted into a fan motor for keeping the rotation speed of the outdoor fan constant, and thereby inhibits reduction in the evaporation temperature of a refrigerant. The control inhibits increase in the amount of frost attaching onto the outdoor heat exchanger and prevents degradation in heating performance. An air conditioner having the features defined in the preamble of claim 1 is known from JP-A-H10-9728.

### SUMMARY OF THE INVENTION

### <Technical Problem>

In employing the control technology described in JP-A-S62-0690704, however, the rotation speed of the outdoor fan is kept constant against ventilation resistance. Therefore, noise is herein obviously increased compared to the frost-free conditions. A user or users may feel uncomfortable due to such noise increase.

It is an object of the present invention to provide an air conditioner for inhibiting noise increase, and simultaneously, inhibiting extreme degradation in heating performance due to frost attachment onto an outdoor heat exchanger.

### <Solution to Problem>

An air conditioner according to the present invention has the features of claim 1

According to the air conditioner of the present invention, noise of the outdoor fan is reduced in response to reduction in the rotation speed of the outdoor fan even when noise is easily produced due to frost attachment onto the outdoor heat exchanger during execution of the heating operation. Therefore, increase in noise of the entire air conditioner is inhibited. Further, degradation in heating performance is inhibited by increasing the operating frequency of the compressor. It should be noted that noise of the compressor is increased in accordance with increase in the operating frequency of the compressor. However, noise of the outdoor fan is herein reduced. Consequently, noise increase is inhibited for the entire air conditioner.

In an air conditioner according to the present invention the control unit is further configured to reduce the rotation speed of the outdoor fan in accordance with an increase amount of the operating frequency of the compressor during execution of the frost attaching condition operation control.

According to the air conditioner of the present invention, noise is increased in accordance with the increase amount of the operating frequency of the compressor. However, the rotation speed of the outdoor fan is reduced to the extent that the increase amount of the noise is cancelled out. Therefore, noise is kept roughly constant in the entire air conditioner.

Embodiments of the invention are named in the dependent claims.

In a first embodiment, the air conditioner further includes a first temperature sensor and a second temperature sensor. The first temperature sensor is configured to detect an outdoor temperature, while the second temperature sensor is configured to detect a temperature of the outdoor heat exchanger. Further, the control unit is configured to: monitor a difference between a value detected by the first temperature sensor and a value detected by the second temperature sensor; and determine that the amount of frost attaching onto the outdoor heat exchanger is increased when the difference is increased.

According to the air conditioner of this first embodiment, it is estimated that the evaporation temperature of the refrigerant is reduced due to frost attachment when the difference between the outdoor temperature and the temperature of the outdoor heat exchanger is increased. This is because the difference between the outdoor temperature and the evaporation temperature of the refrigerant is roughly constant in a frost-free condition of the outdoor heat exchanger during execution of the heating operation. Therefore, it is easily determined whether or not the amount of frost attaching onto the outdoor heat exchanger is increased through the monitoring of the difference between the outdoor temperature and the temperature of the outdoor heat exchanger.

An air conditioner according to a second embodiment, the air conditioner further includes a third temperature sensor. The third temperature sensor is configured to detect a temperature of the indoor heat exchanger. Further, the control unit is configured to: monitor the temperature of the indoor heat exchanger through the third temperature sensor; and increase the operating frequency of the compressor in accordance with a reduction amount of the temperature of the indoor heat exchanger during execution of the frost attaching condition operation control.

According to the air conditioner of the second embodiment, degradation in heating performance is expressed as reduction in the condensation temperature during execution of the heating operation. Therefore, degradation in heating performance is inhibited by increasing the operating frequency of the compressor in accordance with the reduction amount of the temperature of the indoor heat exchanger.

In an air conditioner according to a third embodiment the control unit includes change amounts preliminarily set for changing the operating frequency of the compressor in stages. The change amounts correspond to the stages on a one-to-one basis. The operating frequency of the compressor is herein configured to be increased by corresponding one of the change amounts required for upgrading a present stage of the operating frequency of the compressor to a stage immediately higher than the present stage every time the temperature of the indoor heat exchanger is reduced by a predetermined amount.

According to the air conditioner of the third embodiment, multiple stages are set for the operating frequency of the compressor in order to increase or reduce the operating frequency of the compressor in stages in accordance with a load during execution of the normal operation. Further, the stages are designed to be applied to the operating frequency during execution of the frost attaching condition operation control. Therefore, the control design can be easily created.

An air conditioner according to a fourth embodiment includes a pressure sensor. The pressure sensor is disposed on a discharge side of the compressor. The pressure sensor is configured to detect a higher side pressure. Further, the control unit is configured to: monitor the higher side pressure through the pressure sensor; and increase the operating frequency of the compressor in accordance with a reduction amount of the higher side pressure during execution of the frost attaching condition operation control.

According to the air conditioner of the fourth embodiment, degradation in heating performance is expressed as reduction in the higher side pressure during execution of the heating operation. Therefore, degradation in heating performance is inhibited by increasing the operating frequency of the compressor in accordance with the reduction amount of the higher side pressure.

In an air conditioner according to a fifth embodiment the control unit includes change amount preliminarily set for changing the operating frequency of the compressor in stages. The change amounts correspond to the stages of the operating frequency of the compressor on a one-to-one basis. The operating frequency of the compressor is configured to be increased by corresponding one of the change amounts required for upgrading a present stage of the operating frequency of the compressor to a stage immediately higher than the present stage every time the higher side pressure is reduced by a predetermined amount.

According to the air conditioner of the fifth embodiment, multiple stages are set for the operating frequency of the compressor in order to increase or reduce the operating frequency of the compressor in stages in accordance with load during execution of the normal operation. Further, the stages are designed to be applied to the operating frequency of the compressor during execution of the frost attaching condition operation control. Therefore, the control design can be easily created.

In an air conditioner according to a sixth embodiment, the control unit is configured to: count an elapsed time after activation of the compressor; and execute a defrosting operation control for resolving frost attachment onto the outdoor heat exchanger when the elapsed time reaches a predetermined period of time during execution of the frost attaching condition operation condition while an evaporation temperature of the refrigerant reaches a predetermined temperature.

According to the air conditioner of the sixth embodiment, the frost attaching condition operation control is executed until immediately before the start of the defrosting operation. This makes a user or users less likely to feel that heating is insufficient.

### <Advantageous Effects of Invention>

According to the air conditioner of the present invention, noise of the outdoor fan is reduced even when noise is easily produced due to frost attachment onto the outdoor heat exchanger during execution of the heating operation. Therefore, noise increase is inhibited for the entire air conditioner. Further, degradation in heating performance due to frost attachment is inhibited by increasing the operating frequency of the compressor.

According to the air conditioner of the present invention, noise is increased in accordance with the increase amount of the operating frequency of the compressor. However, the rotation speed of the outdoor fan is reduced to the extent that the increase amount of the noise is cancelled out. Therefore, noise is kept roughly constant in the entire air conditioner.

According to the air conditioner of the first embodiment, it is easily determined whether or not the amount of frost attaching onto the outdoor heat exchanger is increased through the monitoring of the difference between the outdoor temperature and the temperature of the outdoor heat exchanger.

According to the air conditioner of the second embodiment, degradation in heating performance is expressed as reduction in the condensation temperature during execution of the heating operation. Therefore, degradation in heating performance is inhibited by increasing the operating frequency of the compressor in accordance with the reduction amount of the temperature of the indoor heat exchanger.

According to the air conditioner of the third embodiment, multiple stages are set for the operating frequency of the compressor in order to increase or reduce the operating frequency of the compressor in stages in accordance with load during execution of the normal operation. Further, the stages are designed to be applied to the operating frequency during execution of the frost attaching condition operation control. Therefore, the control design can be easily created.

According to the air conditioner of the fourth embodiment, degradation in heating performance is expressed as reduction in the higher side pressure during execution of the heating operation. Therefore, degradation in heating performance is inhibited by increasing the operating frequency of the compressor in accordance with the reduction amount of the higher side pressure.

According to the air conditioner of the fifth embodiment, multiple stages are set for the operating frequency of the compressor in order to increase or reduce the operating frequency of the compressor in stages in accordance with load during execution of the normal operation. Further, the stages are designed to be applied to the operating frequency of the compressor during execution of the frost attaching condition operation control. Therefore, the control design can be easily created.

According to the air conditioner of the sixth embodiment, the frost attaching condition operation control is executed until immediately before the start of the defrosting operation. This makes a user or users less likely to feel that heating is insufficient.

### BRIEF DESCRIPTION OF THE DRAWINGS

FIG. 1 is a configuration diagram of an air conditioner according to a first exemplary embodiment of the present invention.
FIG. 2 includes charts representing relations among outdoor fan input, outdoor fan rotation speed and outdoor fan blowing sound in executing a normal control under a frost attaching condition.
FIG. 3 is an operational flowchart from start of a heating operation control to start of a defrosting operation control.
FIG. 4 is a chart representing relations among elapsed time after start of a heating operation, indoor heat exchanger temperature and compressor operating frequency.
FIG. 5 is an operational flowchart from start of a heating operation control to start of a defrosting operation control in an air conditioner according to a first modification of the present invention.
FIG. 6 is an operational flowchart from start of a heating operation control to start of a defrosting operation control in an air conditioner according to a second modification of the present invention.
FIG. 7 is a chart representing relations among elapsed time after start of a heating operation, indoor heat exchanger temperature and compressor operating frequency in an air conditioner according to a second exemplary embodiment.
FIG. 8 is a chart representing relations among elapsed time after start of a heating operation, higher side pressure and compressor operating frequency in an air conditioner according to a modification of the second exemplary embodiment.

### DESCRIPTION OF EMBODIMENTS

Exemplary embodiments of the present invention will be hereinafter explained with reference to figures. It should be noted that the following exemplary embodiments are specific examples of the present invention and are not intended to limit the technical scope of the present invention.

### <First Exemplary Embodiment

### <Air Conditioner Structure>

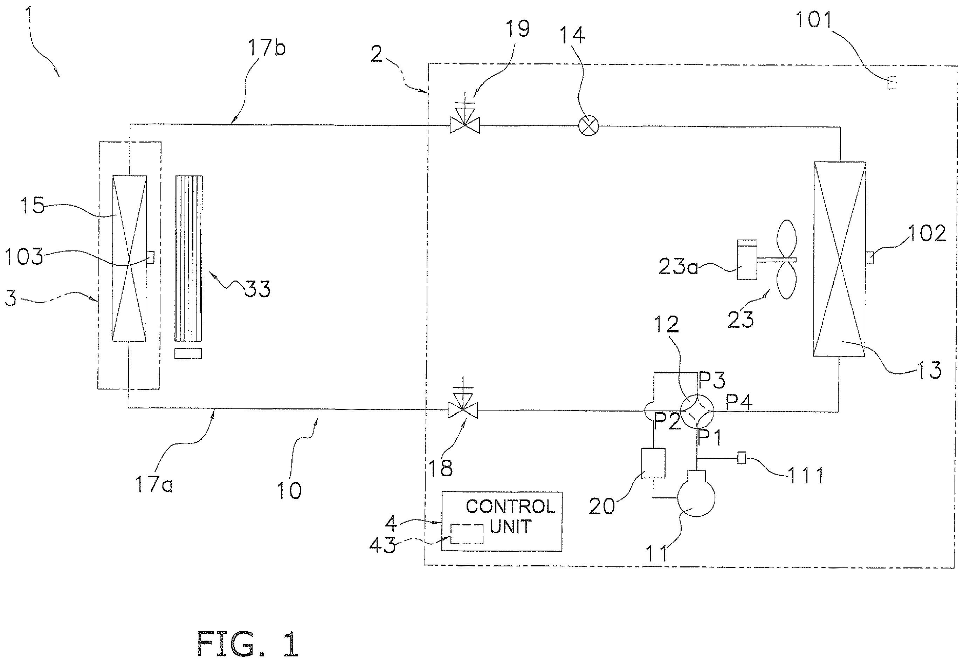

FIG. 1 is a configuration diagram of an air conditioner according to a first exemplary embodiment of the present invention. In FIG. 1, the air conditioner 1 includes an outdoor unit 2 and an indoor unit 3. It should be noted that a plurality of the indoor units 3 may be herein provided.

The air conditioner 1 includes a refrigerant circuit 10 filled with a refrigerant. The refrigerant circuit 10 includes an outdoor circuit accommodated in the outdoor unit 2 and an indoor circuit accommodated in the indoor unit 3. The outdoor circuit and the indoor circuit are connected through a gas-side communicating pipe 17a and a liquid-side communicating pipe 17b.

### <Outdoor Unit Configuration>

A compressor 11, a four-way switching valve 12, an outdoor heat exchanger 13 and an expansion valve 14 are connected to the outdoor circuit in the outdoor unit 2. A liquid-side closing valve 19 is disposed in one end of the outdoor circuit, and the liquid-side communicating pipe 17b is connected thereto. A gas-side closing valve 18 is disposed on the other end of the outdoor circuit, and the gas-side communicating pipe 17a is connected thereto.

The discharge side of the compressor 11 is connected to a first port P1 of the four-way switching valve 12. The suction side of the compressor 11 is connected to a third port P3 of the four-way switching valve 12 via an accumulator 20. The accumulator 20 is configured to separate the liquid refrigerant and the gas refrigerant.

The outdoor heat exchanger 13 is a cross-fin type fin-and-tube heat exchanger. An outdoor fan 23 is disposed in the vicinity of the outdoor heat exchanger 13 in order to supply outdoor air to the outdoor heat exchanger 13. One end of the outdoor heat exchanger 13 is connected to a fourth port P4 of the four-way switching valve 12. The other end of the outdoor heat exchanger 13 is connected to the expansion valve 14 functioning as a decompression unit.

The expansion valve 14 is an electronic expansion valve of an opening degree variable type and is connected to the liquid-side closing valve 19. Further, a second port P2 of the four-way switching valve 12 is connected to the gas-side closing valve 18.

The four-way switching valve 12 is configured to switch between a first state (a state depicted with a solid line in FIG. 1) and a second state (a state depicted with a dotted line in FIG. 1). In the first state, the first port P1 and the fourth port P4 are communicated while the second port P2 and the third port P3 are communicated. In the second state, the first port P1 and the second port P2 are communicated while the third port P3 and the fourth port P4 are communicated.

### <Indoor Unit Structure>

The indoor circuit is provided with an indoor heat exchanger 15. The indoor heat exchanger 15 is a cross-fin type fin-and-tube heat exchanger. An indoor fan 33 is disposed in the vicinity of the indoor heat exchanger 15 in order to supply indoor air to the indoor heat exchanger 15.

### <Various Sensors>

The air conditioner 1 includes an outdoor temperature sensor 101 formed by a thermistor, an outdoor heat exchanger temperature sensor 102 and an indoor heat exchanger temperature sensor 103. The outdoor temperature sensor 101 is configured to detect the temperature of the surrounding of the outdoor unit 2. The outdoor heat exchanger temperature sensor 102 is attached to the outdoor heat exchanger 13 and is configured to detect the temperature of the refrigerant flowing through a predetermined region of the outdoor heat exchanger 13. Then, a control unit 4 is configured to control the operation of the air conditioner 1 based on the values measured by the aforementioned temperature sensors.

### <Air Conditioner Actions>

The operation of the air conditioner 1 can be switched into either the cooling operation or the heating operation through the four-way switching valve 12.

### (Cooling Operation)

In the cooling operation, the four-way switching valve 12 is set to be in the first state (depicted with the solid line in FIG. 1). When the compressor 11 is operated under the condition, a vapor compression refrigeration cycle is executed in the refrigerant circuit 10. In this case, the outdoor heat exchanger 13 is configured to function as a condenser whereas the indoor heat exchanger 15 is configured to function as an evaporator.

High-pressure refrigerant discharged from the compressor 11 exchanges heat with the outdoor air in the outdoor heat exchanger 13 and is thereby condensed. After passing through the outdoor heat exchanger 13, the refrigerant is decompressed in passing through the expansion valve 14. Subsequently, the decompressed refrigerant exchanges heat with the indoor air in the indoor heat exchanger 15 and is thereby evaporated. After passing through the indoor heat exchanger 15, the refrigerant is inhaled into the compressor 11 and is therein compressed.

### (Heating Operation)

In the heating operation, the four-way switching valve 12 is set to be in the second state (depicted with the dotted line in FIG. 1). When the compressor 11 is then operated under the condition, a vapor compression refrigeration cycle is executed in the refrigerant circuit 10. In this case, the outdoor heat exchanger 13 is configured to function as an evaporator whereas the indoor heat exchanger 15 is configured to function as a condenser.

High-pressure refrigerant discharged from the compressor 11 exchanges heat with the indoor air in the indoor heat exchanger 15 and is thereby condensed. The condensed refrigerant is decompressed in passing through the expansion valve 14. Subsequently, the decompressed refrigerant exchanges heat with the outdoor air in the outdoor heat exchanger 13 and is thereby evaporated. After passing through the outdoor heat exchanger 13, the refrigerant is inhaled into the compressor 11 and is therein compressed.

### <Outdoor Fan>

The outdoor fan 23 includes a motor 23a. The motor 23a is a long-life brushless DC motor and is configured to execute a duty control. Specifically, the motor 23a is configured to control an on-time ratio in a power input cycle (i.e., a duty cycle) in order to change the rotation speed of the outdoor fan 23. For example, the rotation speed of the outdoor fan 23 is reduced when ventilation resistance increases due to frost attachment onto the outdoor heat exchanger 13. However, power supply to be inputted into the motor 23a of the outdoor fan 23 is increased in proportion to increase in the duty cycle. The rotation speed of the outdoor fan 23 is accordingly increased.

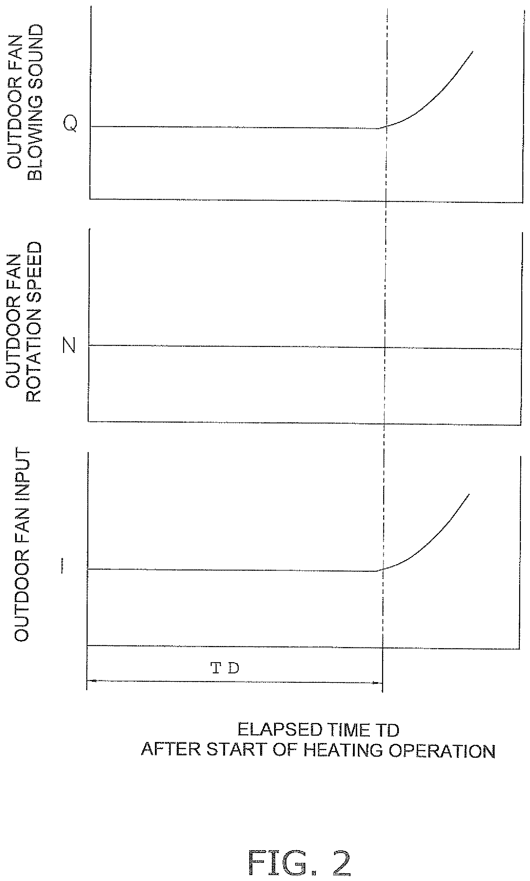

In the normal control, power supply inputted into the motor 23a is increased or reduced for keeping the rotation speed of the outdoor fan 23 constant. Specifically, for keeping the rotation speed of the outdoor fan 23 constant, the outdoor fan input is increased or reduced in response to increase or reduction in the rotation speed of the outdoor fan 23. FIG. 2 includes charts representing "relations among outdoor fan input, outdoor fan rotation speed and outdoor fan blowing sound in executing a normal control under a frost attaching condition". In the charts, the horizontal axes, from bottom to top, represent elapsed time after start of a heating operation, whereas the vertical axes represent outdoor fan input, outdoor fan rotation speed and outdoor fan blowing sound. When a predetermined period of time TD is elapsed after start of the heating operation, frost starts attaching onto the outdoor heat exchanger 13 and ventilation resistance accordingly starts increasing. In the normal control, the outdoor fan input is increased for preventing reduction in the rotation speed due to ventilation resistance and thereby for keeping the rotation speed of the outdoor fan 23 constant. Therefore, blowing sound is acutely increased.

### <Operational Flow from Start of Heating Operation Control to Start of Defrosting Operation Control>

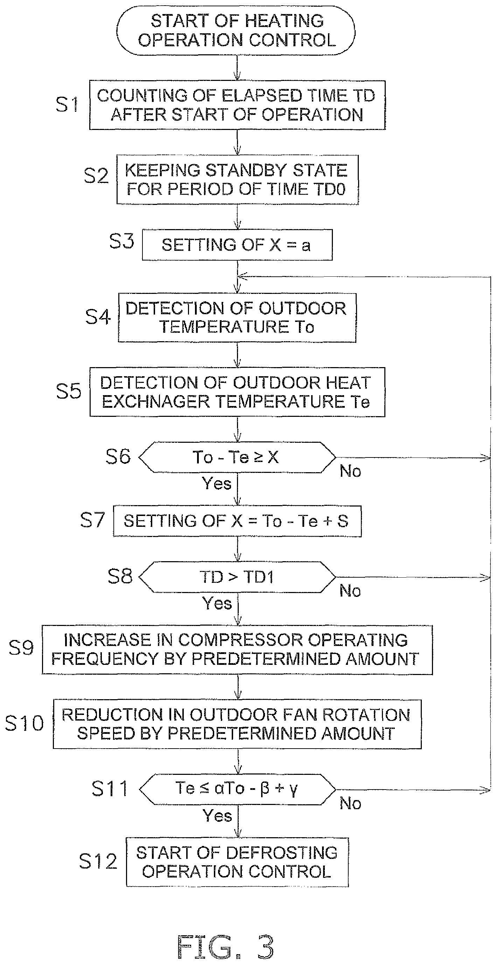

FIG. 3 is an operational flowchart from start of a heating operation control to start of a defrosting operation control. When a heating operation is started, the control unit 4 starts counting an elapsed time TD after the start of the heating operation in Step S1. The processing then proceeds to Step S2. In Step S2, the control unit 4 keeps a standby state for a predetermined period of time (TD0) until the rotation speed of the compressor 11 reaches a target rotation speed. The processing then proceeds to Step S3 and the control unit 4 sets the value of a variable X to be "a". A value, herein substituted in the variable X, is obtained by adding a predetermined value to the difference between an outdoor temperature To and an outdoor heat exchanger temperature Te. It should be noted that the difference between the outdoor temperature To and the outdoor heat exchanger temperature Te is constant when the outdoor heat exchanger 13 is in a frost-free condition. Therefore, the value "a" of a temperature slightly higher than the difference is set as the initial value of the variable X.

In Step S4, the control unit 4 detects the outdoor temperature To through the outdoor temperature sensor 101. The processing then proceeds to Step S5. In Step S5, the control unit 4 detects the outdoor heat exchanger temperature Te through the outdoor heat exchanger temperature sensor 102. The processing then proceeds to Step S6. In Step S6, the control unit 4 determines whether or not the difference between the outdoor temperature To and the outdoor heat exchanger temperature Te is greater than or equal to X.

The processing then proceeds to Step S7 when the control unit 4 determines the result in Step S6 as "Yes". By contrast, the processing returns to Step S4 when the control unit 4 determines the result in Step S6 as "No". When the outdoor heat exchanger 13 is in a frost-free condition, "X = a" remains and therefore a control in Steps S1 to S6, so-called a normal heating operation control, is continued.

In Step S7, the control unit 4 sets the value of the variable X to be a value obtained by adding a predetermined amount "s" to "To - Te" in Step S6 (i.e., To - Te + s). The processing then proceeds to Step S8. When the difference between the outdoor temperature To and the outdoor heat exchanger temperature Te is greater than "a", the evaporation temperature of the refrigerant is lowered. Therefore, it is determined that frost attaches onto the outdoor heat exchanger 13. Subsequently, the control unit 4 resets the value of the variable X every time the difference between the outdoor temperature To and the outdoor heat exchanger temperature Te is reduced by the predetermined amount "s".

In Step S8, the control unit 4 determines whether or not the elapsed time TD after start of the heating operation reaches a predetermined period of time TD1. The processing then proceeds to Step S9 when the control unit 4 determines the result in Step S8 as "Yes". By contrast, the processing returns to Step S4 when the control unit 4 determines the result in Step S8 as "No". To reliably achieve a predetermined level of operation efficiency, the control unit 4 herein determines whether or not "TD > TD1" is true. It should be noted that the operation efficiency is set as a ratio of a net heating operation time to a total heating operation time, where the total heating operation time is set as the sum of the net heating operation time and a defrosting operation time.

In Step S9, the control unit 4 increases the operating frequency of the compressor 11 by a predetermined amount. The control unit 4 executes Step S9 for preventing degradation in heating performance until the heating operation control is switched into the defrosting operation control after the predetermined period of time TD1 is elapsed for reliably achieving a predetermined level of operation efficiency. The control unit 4 includes change amounts preliminarily set for changing the operating frequency of the compressor 11 in stages. The change amounts herein correspond to the stages on a one-to-one basis. In increasing the operating frequency of the compressor 11, the control unit 4 is configured to increase the operating frequency by corresponding one of the change amounts required for upgrading the present stage of the operating frequency of the compressor 11 to a stage immediately higher than the present stage.

In Step S10, the control unit 4 reduces the rotation speed of the outdoor fan 23 by a predetermined amount. The control unit 4 executes Step S10 for cancelling out noise increased in response to increase in the operating frequency of the compressor 11 by reducing the rotation sound of the outdoor fan 23. Therefore, noise is increased in response to increase in the operating frequency of the compressor 11, whereas noise is reduced in response to reduction in the rotation speed of the outdoor fan 23. Consequently, noise is kept roughly constant in the air conditioner 1.

In Step S11, the control unit 4 determines whether or not the outdoor heat exchanger temperature Te is less than or equal to a predetermined calculated value. The processing then proceeds to Step S12 when the control unit 4 determines the result in Step S11 as "Yes". In Step S12, the control unit 4 starts executing the defrosting operation control. By contrast, the processing returns to Step S4 when the control unit 4 determines the result in Step S11 as "No". The predetermined calculated value is a value calculated based on the outdoor temperature To (i.e., αTo - β + γ). The calculated value is set in consideration of not only lowering in the outdoor temperature To but also the other factors (e.g., humidity) as the reasons for frost attachment onto the outdoor heat exchanger 13.

### (Relation between Indoor Heat Exchanger Temperature and Increase in Compressor Operating Frequency)

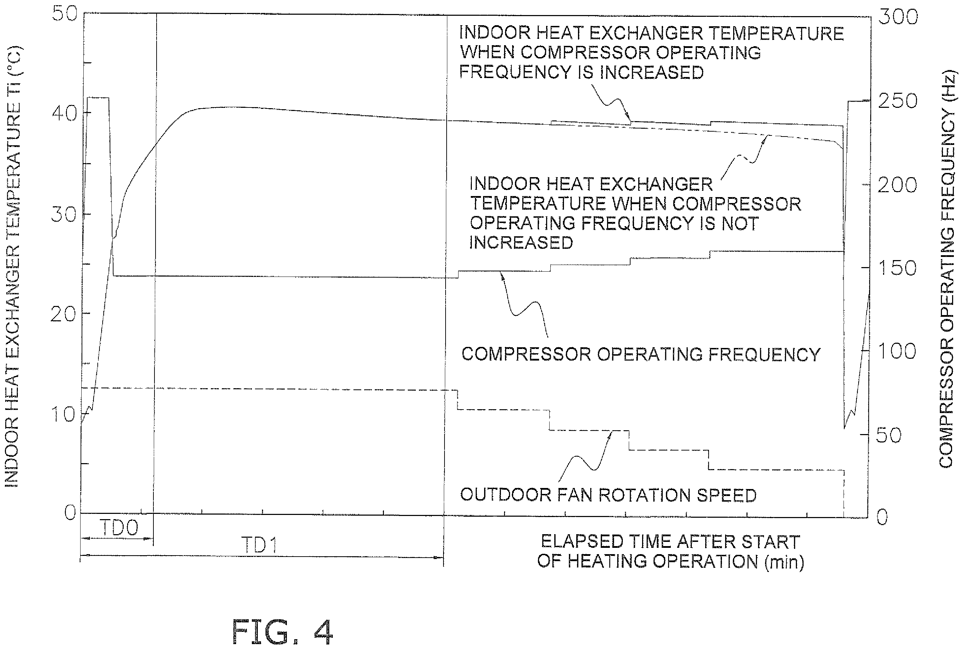

As represented in Steps S4 to S10 of FIG. 3, the control unit 4 increases the operating frequency of the compressor 11 and reduces the rotation speed of the outdoor fan 23 every time the difference between the outdoor temperature To and the outdoor heat exchanger temperature Te exceeds the predetermined amount "s". FIG. 4 is a chart representing the relation among elapsed time after start of the heating operation, indoor heat exchanger temperature and compressor operating frequency. It should be noted that FIG. 4 simply represents how the rotation speed of the outdoor fan 23 is reduced with a dotted line on a conceptual basis. Therefore, vertical plots of the dotted line are not exactly matched with the frequency values of the right side scale in the chart.

FIG. 4 represents that reduction in an indoor heat exchanger temperature Ti starts before the predetermined period of time TD1 is elapsed after start of the heating operation. The reason is that the amount of frost attaching onto the outdoor heat exchanger 13 is increased and the evaporation temperature of the refrigerant is lowered. The condensation temperature of the refrigerant is increased when the control unit 4 upgrades the present stage of the operating frequency of the compressor 11 to a stage immediately higher than the present stage. This is expressed as increase in the indoor heat exchanger temperature Ti. Suppose the control unit 4 does not increase the operating frequency of the compressor 11, the indoor heat exchanger temperature Ti is reduced along the slope depicted with a dashed two-dotted line in FIG. 4. Accordingly, heating performance is also degraded.

The control unit 4 downgrades the rotation speed of the outdoor fan 23 from the present level to a level immediately lower than the present level in order to cancel out a partial amount of noise increased in response to increase in the operating frequency of the compressor 11. Such actions are repeated until start of the defrosting operation control. It should be noted that the control, which is executed until start of the defrosting operation control after the heating operation is started and the predetermined period of time TD1 is further elapsed, will be hereinafter referred to as "a frost attaching condition operation control" for easy explanation.

### <Features>

(1) In the air conditioner 1, a determining part 43 of the control unit 4 determines that the amount of frost attaching onto the outdoor heat exchanger 13 is increased when the difference between the outdoor temperature To and the outdoor heat exchanger temperature Te is increased. Accordingly, the frost attaching condition operation control is executed for increasing the operating frequency of the compressor 11 in accordance with the reduction amount of temperature of the indoor heat exchanger 15 and for reducing the rotation speed of the outdoor fan 23. The control unit 4 includes the change amounts preliminarily set for changing the operating frequency of the compressor 11 in stages, and the change amounts correspond to the stages on a one-to-one basis. The control unit 4 is configured to increase the operating frequency of the compressor 11 by corresponding one of the change amounts required for upgrading the present stage of the operating frequency of the compressor 11 to a stage immediately higher than the present stage every time the temperature of the indoor heat exchanger 15 is reduced by a predetermined amount. Further, the control unit 4 is configured to reduce the rotation speed of the outdoor fan 23 in accordance with the change amount. Consequently, degradation in heating performance, caused due to frost attachment onto the outdoor heat exchanger, is inhibited in executing the heating operation. Further, noise of the compressor 11 is increased in response to increase in the operating frequency of the compressor 11. However, noise of the outdoor fan 23 is reduced in accordance with reduction in the rotation speed of the outdoor fan 23. Therefore, noise increase is inhibited for the entire air conditioner 1.
(2) In the air conditioner 1, the control unit 4 is configured to count the elapsed time TD immediately after activation of the compressor 11 and execute the defrosting operation control for resolving a frost attachment condition of the outdoor heat exchanger 13 when the elapsed time TD reaches the predetermined period of time TD1 during execution of the frost attaching condition operation control and the evaporation temperature of the refrigerant (i.e., the outdoor heat exchanger temperature Te) becomes less than or equal to a predetermined temperature. Consequently, the frost attaching condition operation control is configured to be executed until immediately before start of the defrosting operation. This makes a user or users less likely to feel that heating is insufficient.

### <First Modification>

In the aforementioned exemplary embodiment, the control unit 4 is configured to monitor the difference between the outdoor temperature To and the outdoor heat exchanger temperature Te, and simultaneously, control the compressor 11 and the outdoor fan 23 in executing the frost attaching condition operation control. As an alternative method, the control unit 4 may be configured to monitor the indoor heat exchanger temperature Ti, and simultaneously, control the compressor 11 and the outdoor fan 23.

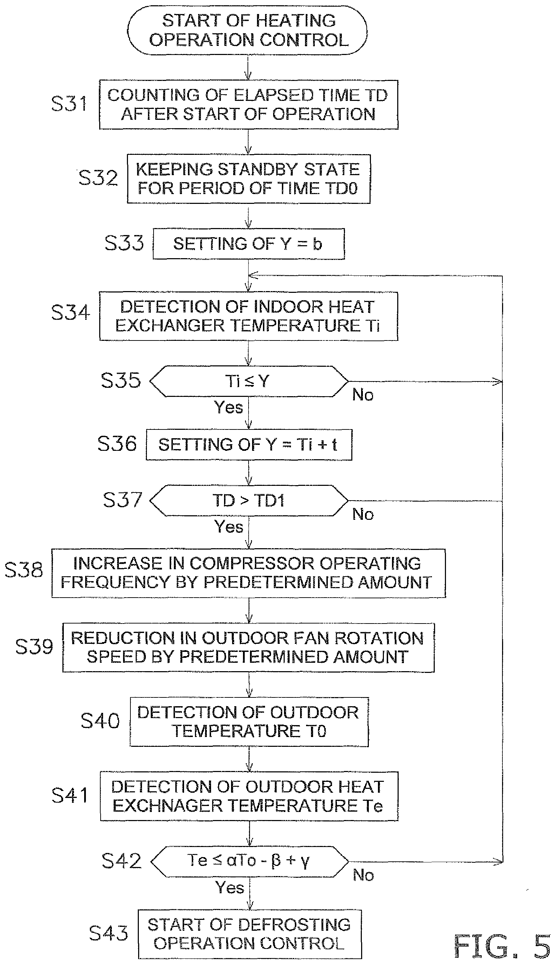

FIG. 5 is an operational flowchart from start of the heating operation control to start of the defrosting operation control in an air conditioner according to a first modification of the present invention. In FIG. 5, the control unit 4 starts counting the elapsed time TD after start of the heating operation in Step S31. The processing then proceeds to Step S32. In Step S32, the control unit 4 keeps a standby state for a predetermined period of time (TD0) until the rotation speed of the compressor 11 reaches a target rotation speed. The processing then proceeds to Step S33 and the control unit 4 sets the value of a variable Y to be "b". A value, herein substituted into the variable Y, is obtained by adding a predetermined amount "t" to the indoor heat exchanger temperature Ti. However, the indoor heat exchanger temperature Ti is constant when the outdoor heat exchanger 13 is in a frost-free condition. Therefore, the value "b" of a temperature slightly lower than the condensation temperature of the refrigerant is set as the initial value of the variable Y.

In Step S34, the control unit 4 detects the indoor heat exchanger temperature Ti through the indoor heat exchanger temperature sensor 103. The processing then proceeds to Step S35. In Step S35, the control unit 4 determines whether or not the indoor heat exchanger temperature Ti becomes less than or equal to Y.

The processing then proceeds to Step S36 when the control unit 4 determines the result in Step S35 as "Yes". By contrast, the processing returns to Step S34 when the control unit 4 determines the result in Step S35 as "No". When the outdoor heat exchanger 13 is in a frost-free condition, "Y = b" remains and therefore the control from Step S31 to Step S35, so-called a normal heating operation control, is continued.

In Step S36, the control unit 4 sets the variable Y to be a value obtained by adding a predetermined amount "t" to the indoor heat exchanger temperature Ti (i.e., Ti + t). The processing then proceeds to Step S37. When the indoor heat exchanger temperature Ti becomes less than or equal to "b", it is determined that the condensation temperature is lowered due to increase in the amount of frost attaching onto the outdoor heat exchanger 13. The control unit 4 subsequently resets the variable Y every time the indoor heat exchanger temperature Ti is reduced by a predetermined amount "t".

In Step S37, the control unit 4 determines whether or not the elapsed time TD after start of the heating operation reaches the predetermined period of time TD1 . The processing then proceeds to Step S38 when the control unit 4 determines the result in Step S37 as "Yes". By contrast, the processing returns to Step S34 when the control unit 4 determines the result in Step S37 as "No".

In Step S38, the control unit 4 increases the operating frequency of the compressor 11 by a predetermined amount. In Step S39, the control unit 4 reduces the rotation speed of the outdoor fan 23 by a predetermined amount. In Step S40, the control unit 4 detects the outdoor temperature To through the outdoor temperature sensor 101. In Step S41, the control unit 4 detects the outdoor heat exchanger temperature Te through the outdoor heat exchanger temperature sensor 102.

In Step S42, the control unit 4 determines whether or not the outdoor heat exchanger temperature Te becomes less than or equal to a calculated value (i.e., αTo - β + γ). The control unit 4 starts executing the defrosting operation control when determining the result in Step S42 as "Yes". By contrast, the processing returns to Step S34 when the control unit 4 determines the result in Step S42 as "No".

As described above, the control unit 4 can monitor the indoor heat exchanger temperature Ti, and simultaneously, control the compressor 11 and the outdoor fan 23. Therefore, it is herein possible to achieve an advantageous effect equivalent to that achieved in the aforementioned exemplary embodiment.

### <Second Modification>

In the first modification, the control unit 4 is configured to monitor the indoor heat exchanger temperature Ti, and simultaneously, control the compressor 11 and the outdoor fan 23. However, the control unit 4 may be configured to monitor a higher side pressure Ph instead of the indoor heat exchanger temperature Ti, and simultaneously, control the compressor 11 and the outdoor fan 23.

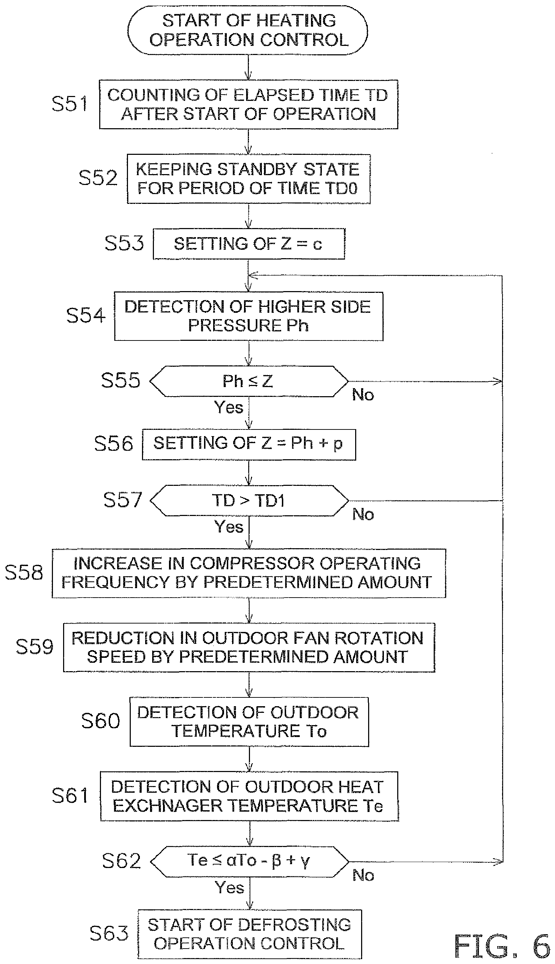

FIG. 6 is an operational flowchart from start of the heating operation control to start of the defrosting operation control in an air conditioner according to a second modification of the present invention. In FIG. 6, the control unit 4 starts counting the elapsed time TD after start of the heating operation in Step S51. The processing then proceeds to Step S52. In Step S52, the control unit 4 keeps a standby state for a predetermined period of time (TD0) until the rotation speed of the compressor 11 reaches a target rotation speed. The processing then proceeds to Step S53 and the control unit 4 sets the value of a variable Z to be "c". A value, herein substituted into the variable Z, is obtained by adding a predetermined amount "p" to the higher side pressure Ph. However, the higher side pressure Ph is constant when the outdoor heat exchanger 13 is in a frost-free condition. Therefore, the value "c" of a pressure slightly lower than the condensation pressure of the refrigerant is set as the initial value of the variable Z.

In Step S54, the control unit 4 detects the higher side pressure Ph through a discharge side pressure sensor 111. The processing then proceeds to Step S55. In Step S55, the control unit 4 determines whether or not the higher side pressure Ph is less than or equal to Z.

The processing then proceeds to Step S56 when the control unit 4 determines the result in Step S55 as "Yes". By contrast, the processing returns to Step S54 when the control unit 4 determines the result in Step S55 as "No". When the outdoor heat exchanger 13 is in a frost-free condition, "Z = c" remains and therefore the control from Step S51 to Step S55, so-called a normal heating operation control, is continued.

In Step S56, the control unit 4 sets the value of the variable Z to be a value obtained by adding a predetermined amount "p" to the higher side pressure Ph (i.e., Ph + p). The processing then proceeds to Step S57. When the higher side pressure Ph becomes less than or equal to "c", it is determined that the condensation pressure is reduced due to increase in the amount of frost attaching onto the outdoor heat exchanger 13. The control unit 4 subsequently resets the variable Z every time the higher side pressure Ph is reduced by the predetermined amount "p".

In Step S57, the control unit 4 determines whether or not the elapsed time TD after start of the heating operation reaches the predetermined period of time TD1. The processing then proceeds to Step S58 when the control unit 4 determines the result in Step S57 as "Yes". By contrast, the processing returns to Step S54 when the control unit 4 determines the result in Step S57 as "No".

In Step S58, the control unit 4 increases the operating frequency of the compressor 11 by a predetermined amount. In Step S59, the control unit 4 reduces the rotation speed of the outdoor fan 23 by a predetermined amount. In Step S60, the control unit 4 detects the outdoor temperature To through the outdoor temperature sensor 101. In Step S61, the control unit 4 detects the outdoor heat exchanger temperature Te through the outdoor heat exchanger temperature sensor 102.

In Step S62, the control unit 4 determines whether or not the outdoor heat exchanger temperature Te becomes less than or equal to a calculated value (i.e., αTo - β + γ). The control unit 4 starts executing the defrosting operation control when determining the result in Step S62 as "Yes". By contrast, the processing returns to Step S54 when the control unit 4 determines the result in Step S62 as "No".

As described above, the control unit 4 can monitor the higher side pressure Ph, and simultaneously, control the compressor 11 and the outdoor fan 23. Therefore, it is herein possible to achieve an advantageous effect equivalent to that achieved in the aforementioned exemplary embodiment and the first modification thereof.

### <Second Exemplary Embodiment>

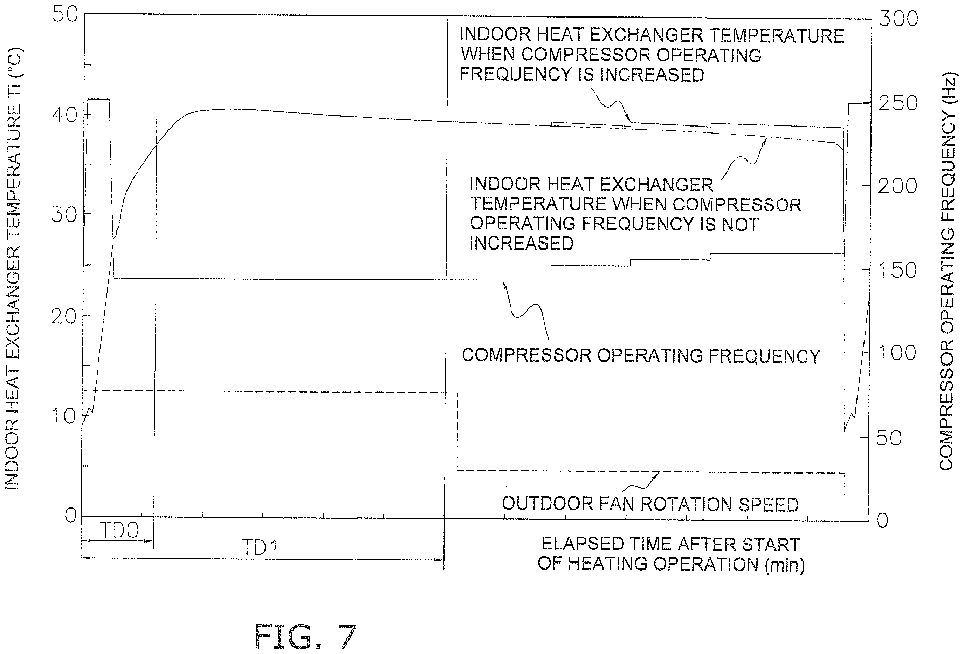

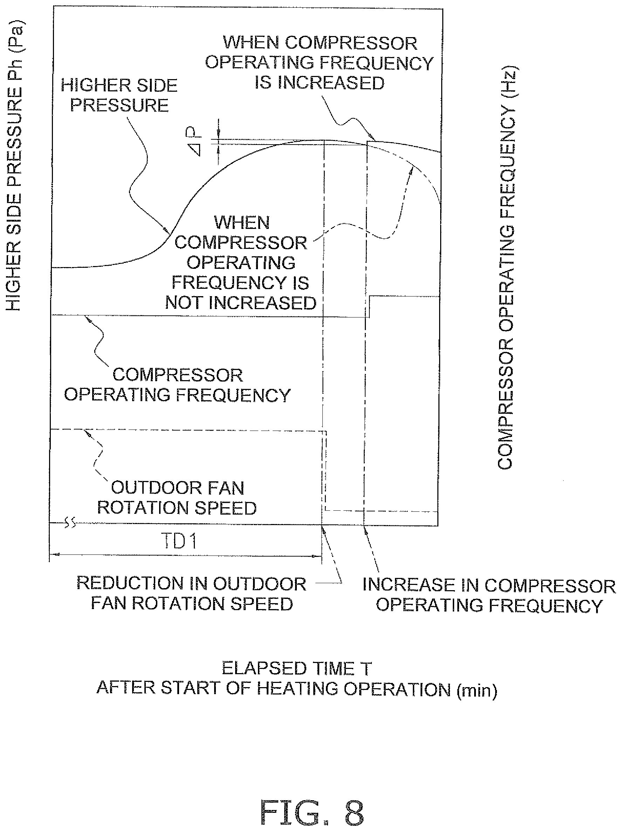

In the aforementioned exemplary embodiment and the first and second modifications thereof, the operating frequency of the compressor 11 is increased, and subsequently, the rotation speed of the outdoor fan 23 is reduced. However, the operation order is not limited to the above. For example, the rotation speed of the outdoor fan 23 may be reduced, and thereafter, the operating frequency of the compressor 11 may be reduced. In this case, noise is reduced in response to reduction in the rotation speed of the outdoor fan 23. Therefore, noise is still acceptable by the reduction amount. Subsequently, the operating frequency of the compressor 11 is increased by the amount corresponding to the acceptable range of noise increase while monitoring is executed for the indoor heat exchanger temperature Ti, the higher side pressure Ph or the difference between the outdoor temperature To and the outdoor heat exchanger temperature Te. With the control, noise is kept constant in the entire air conditioner 1. The following will be explained with reference to FIGS. 7 and 8.

FIG. 7 is a chart representing the relation among elapsed time after start of the heating operation, indoor heat exchanger temperature and compressor operating frequency in an air conditioner according to a second exemplary embodiment. In FIG. 7, the rotation speed of the outdoor fan 23 is reduced to a predetermined rotation speed when it is determined that frost attaches onto the outdoor heat exchanger 13 and the elapsed time TD reaches the predetermined period of time TD1 after start of the heating operation.

Accordingly, noise due to the outdoor fan 23 is reduced and noise is thereby still acceptable by the reduction amount. Subsequently, the indoor heat exchanger temperature Ti is monitored, and simultaneously, the operating frequency of the compressor 11 is increased by the amount corresponding to the acceptable range of noise increase when the indoor heat exchanger temperature Ti is reduced by ΔT. Thus, the indoor heat exchanger temperature Ti is kept roughly constant. It should be noted that ΔT is preferably equal to "3K".

The control unit 4 includes the change amounts preliminarily set for changing the operating frequency of the compressor 11 in stages. The change amounts correspond to the stages on a one-to-one basis. In increasing the operating frequency of the compressor 11, the control unit 4 is configured to increase the operating frequency of the compressor 11 by corresponding one of the change amounts required for upgrading the present stage of the operating frequency of the compressor 11 to a stage immediately higher than the present stage.

### <Modification>

Further, FIG. 8 is a chart representing the relation among elapsed time after start of the heating operation, higher side pressure and compressor operating frequency in an air conditioner according to a modification of the second exemplary embodiment. In FIG. 8, the rotation speed of the outdoor fan 23 is reduced to a predetermined rotation speed when it is determined that frost attaches onto the outdoor heat exchanger 13 and the elapsed time TD after start of the heating operation reaches the predetermined period of time TD1.

Accordingly, noise due to the outdoor fan 23 is reduced and noise is thereby still acceptable by the reduction amount. Subsequently, the higher side pressure Ph is monitored, and simultaneously, the operating frequency of the compressor 11 is increased by the amount corresponding to the acceptable range of noise increase when the higher side pressure Ph is reduced by ΔP. Accordingly, the higher side pressure Ph is kept roughly constant. It should be noted that ΔP is preferably equal to 0.2MPa.

As described above, not only noise is kept constant in the entire air conditioner 1 but also excessive degradation in heating performance is inhibited in the second exemplary embodiment and the modification thereof.

### INDUSTRIAL APPLICABILITY

As described above, according to the present invention, the frost attaching condition operation control inhibits degradation in heating performance in a period of time when the heating performance is normally degraded due to frost attachment. Therefore, the present invention is useful for the general air conditioners using the vapor compression refrigeration cycle.

### REFERENCE SIGNS LIST

- 1: Air conditioner
- 11: Compressor
- 13: Outdoor heat exchanger
- 14: Expansion valve (Decompressor)
- 15: Indoor heat exchanger
- 23: Outdoor fan
- 43: Determining part
- 101: Outdoor temperature sensor (First temperature sensor)
- 102: Outdoor heat exchanger temperature sensor (Second temperature sensor)
- 103: Indoor heat exchanger temperature sensor (Third temperature sensor)

## Claims

1. An air conditioner (1) using a vapor compression refrigeration cycle for circulating a refrigerant sequentially through a compressor (11), an indoor heat exchanger (15), a decompressor (14) and an outdoor heat exchanger (13) during execution of a heating operation, the air conditioner (1) comprising:
an outdoor fan (23) configured to blow the outdoor heat exchanger (13); and
a control unit (4) including a determining part (43) configured to determine whether or not an amount of frost attaching onto the outdoor heat exchanger (13) is increased during execution of the heating operation, the control unit (4) configured to control an operating frequency of the compressor (11) and a rotation speed of the outdoor fan (23),
wherein the control unit (4) is configured to reduce the rotation speed of the outdoor fan (23) when the determining part (43) determines that the amount of frost attaching onto the outdoor heat exchanger (13) is increased, **characterized in that** the control unit (4) is further configured to execute a frost attaching condition operation control for increasing the operating frequency of the compressor (11) either simultaneously with reducing the rotation speed of the outdoor fan (23) or when a predetermined performance degradation is substantially caused after reducing the rotation speed of the outdoor fan (23) and
to reduce the rotation speed of the outdoor fan (23) in accordance with an increase amount of the operating frequency of the compressor (11) during execution of the frost attaching condition operation control.

2. The air conditioner (1) recited in claim 1 further comprising:
a first temperature sensor (101) configured to detect an outdoor temperature; and
a second temperature sensor (102) configured to detect a temperature of the outdoor heat exchanger (13),
wherein the control unit (4) is configured to: monitor a difference between a value detected by the first temperature sensor (101) and a value detected by the second temperature sensor (102); and determine that the amount of frost attaching onto the outdoor heat exchanger (13) is increased when the difference is increased.

3. The air conditioner (1) recited in claim 2, further comprising:
a third temperature sensor (103) configured to detect a temperature of the indoor heat exchanger (15),
wherein the control unit (4) is configured to: monitor the temperature of the indoor heat exchanger (15) through the third temperature sensor (103); and increase the operating frequency of the compressor (11) in accordance with a reduction amount of the temperature of the indoor heat exchanger (15) during execution of the frost attaching condition operation control.

4. The air conditioner (1) recited in claim 3,
wherein the control unit (4) includes change amounts preliminarily set for changing the operating frequency of the compressor (11) in stages, the change amounts corresponding to the stages on a one-to-one basis, and
the operating frequency of the compressor (11) is configured to be increased by corresponding one of the change amounts required for upgrading a present stage of the operating frequency of the compressor (11) to a stage immediately higher than the present stage every time the temperature of the indoor heat exchanger (15) is reduced by a predetermined amount.

5. The air conditioner (1) recited in claim 2, further comprising:
a pressure sensor (111) disposed on a discharge side of the compressor (11), the pressure sensor (111) configured to detect a higher side pressure,
wherein the control unit (4) is configured to: monitor the higher side pressure through the pressure sensor (111); and increase the operating frequency of the compressor (11) in accordance with a reduction amount of the higher side pressure during execution of the frost attaching condition operation control.

6. The air conditioner (1) recited in claim 5,
wherein the control unit (4) includes change amounts preliminarily set for changing the operating frequency of the compressor (11) in stages, the change amounts corresponding to the stages on a one-to-one basis, and
the operating frequency of the compressor (11) is configured to be increased by corresponding one of the change amounts required for upgrading a present stage of the operating frequency of the compressor (11) to a stage immediately higher than the present stage every time the higher side pressure is reduced by a predetermined amount.

7. The air conditioner (1) recited in one of claims 1 to 6, wherein the control unit (4) is configured to: count an elapsed time after activation of the compressor (11); and execute a defrosting operation control for resolving frost attachment onto the outdoor heat exchanger (13) when the elapsed time reaches a predetermined period of time during execution of the frost attaching condition operation control while an evaporation temperature of the refrigerant reaches a predetermined temperature.

## Patentansprüche

1. Klimaanlage (1), die einen Dampfkompressionskühlzyklus zum Zirkulieren eines Kältemittels in Abfolge durch einen Kompressor (11), einen Innenraum-Wärmetauscher (15), einen Dekompressor (14) und einen Außenwärmetauscher (13) während der Ausführung eines Heizungsbetriebs verwendet, wobei die Klimaanlage (1) umfasst:
einen Außenventilator (23), der zum Blasen des Außenwärmetauschers (13) konfiguriert ist; und
eine Steuereinheit (4), die ein Bestimmungsteil (43) beinhaltet, das zum Bestimmen konfiguriert ist, ob sich eine Menge an Frost, die sich an dem Außenwärmetauscher (13) angehaftet hat, während der Ausführung des Heizungsbetriebs erhöht hat oder nicht, wobei die Steuereinheit (4) zum Steuern einer Betriebsfrequenz des Kompressors (11) und einer Drehzahl des Außenventilators (23) konfiguriert ist,
wobei die Steuereinheit (4) zum Reduzieren der Drehzahl des Außenventilators (23) konfiguriert ist, wenn das Bestimmungsteil (43) bestimmt, dass die Menge an Frost, die an dem Außenwärmetauscher (13) anhaftet, zunimmt, **dadurch gekennzeichnet, dass** die Steuereinheit (4) weiter zum Ausführen einer Frostanhaftungszustand-Betriebssteuerung zum Erhöhen der Betriebsfrequenz des Kompressors (11) entweder gleichzeitig mit dem Reduzieren der Drehzahl des Außenventilators (23) oder wenn ein vorbestimmter Leistungsabfall im Wesentlichen verursacht wird, nachdem die Drehzahl des Außenventilators (23) reduziert wurde, konfiguriert ist und
zum Reduzieren der Drehzahl des Außenventilators (23) gemäß einer Menge der Zunahme der Betriebsfrequenz des Kompressors (11) während der Ausführung der Frostanhaftungszustand-Betriebssteuerung.

2. Klimaanlage (1) nach Anspruch 1, weiter umfassend:
einen ersten Temperatursensor (101), der zum Erfassen einer Außentemperatur konfiguriert ist; und
einen zweiten Temperatursensor (102), der zum Erfassen einer Temperatur des Außenwärmetauschers (13) konfiguriert ist,
wobei die Steuereinheit (4) konfiguriert ist zum: Überwachen einer Differenz zwischen einem Wert, der von dem ersten Temperatursensor (101) erfasst wird, und einem Wert, der von dem zweiten Temperatursensor (102) erfasst wird; und zum Bestimmen, dass die Menge an Frost, die an dem Außenwärmetauscher (13) anhaftet, zunimmt, wenn die Differenz zunimmt.

3. Klimaanlage (1) nach Anspruch 2, weiter umfassend:
einen dritten Temperatursensor (103), der zum Erfassen einer Temperatur des Innenraum-Wärmetauschers (15) konfiguriert ist,
wobei die Steuereinheit (4) konfiguriert ist zum: Überwachen der Temperatur des Innenraum-Wärmetauschers (15) durch den dritten Temperatursensor (103); und Erhöhen der Betriebsfrequenz des Kompressors (11) gemäß einer Reduktionsmenge der Temperatur des Innenraum-Wärmetauschers (15) während der Ausführung der Frostanhaftungszustand-Betriebssteuerung.

4. Klimaanlage (1) nach Anspruch 3,
wobei die Steuereinheit (4) Änderungsmengen beinhaltet, die vorläufig zum Ändern der Betriebsfrequenz des Kompressors (11) in Stufen eingestellt sind, wobei die Änderungsmengen den Stufen auf einer Eins-zu-Eins-Basis entsprechen, und
wobei die Betriebsfrequenz des Kompressors (11) zum Erhöhen um eine entsprechende der Änderungsmengen konfiguriert ist, die zum Verbessern einer derzeitigen Stufe der Betriebsfrequenz des Kompressors (11) auf eine Stufe unmittelbar höher als die derzeitige Stufe jedes Mal dann erforderlich ist, wenn die Temperatur des Innenraum-Wärmetauschers (15) um eine vorbestimmte Menge reduziert wird.

5. Klimaanlage (1) nach Anspruch 2, weiter umfassend:
einen Drucksensor (111), der auf einer Abgabeseite des Kompressors (11) angeordnet ist, wobei der Drucksensor (111) zum Erfassen eines höheren Seitendrucks konfiguriert ist,
wobei die Steuereinheit (4) konfiguriert ist zum: Überwachen des höheren Seitendrucks durch den Drucksensor (111); und Erhöhen der Betriebsfrequenz des Kompressors (11) gemäß einer Reduktionsmenge des höheren Seitendrucks während der Ausführung der Frostanhaftungszustand-Betriebssteuerung.

6. Klimaanlage (1) nach Anspruch 5,
wobei die Steuereinheit (4) Änderungsmengen beinhaltet, die vorläufig zum Ändern der Betriebsfrequenz des Kompressors (11) in Stufen eingestellt sind, wobei die Änderungsmengen den Stufen auf einer Eins-zu-Eins-Basis entsprechen, und
wobei die Betriebsfrequenz des Kompressors (11) zum Erhöhen um eine entsprechende der Änderungsmengen konfiguriert ist, die zum Verbessern einer derzeitigen Stufe der Betriebsfrequenz des Kompressors (11) auf eine Stufe unmittelbar höher als die derzeitige Stufe jedes Mal dann erforderlich ist, wenn der höhere Seitendruck um eine vorbestimmte Menge reduziert wird.

7. Klimaanlage (1) nach einem der Ansprüche 1 bis 6, wobei die Steuereinheit (4) konfiguriert ist zum: Zählen einer verstrichenen Zeit nach der Aktivierung des Kompressors (11); und Ausführen einer Auftaubetriebssteuerung zum Auflösen der Frostanhaftung an den Außenwärmetauscher (13), wenn die verstrichene Zeit während der Ausführung der Frostanhaftungszustand-Betriebssteuerung eine vorbestimmte Zeitdauer erreicht, während eine Verdampfungstemperatur des Kältemittels eine vorbestimmte Temperatur erreicht.

## Revendications

1. Climatiseur (1) utilisant un cycle de réfrigération à compression de vapeur pour acheminer un réfrigérant en séquence à travers un compresseur (11), un échangeur de chaleur intérieur (15), un décompresseur (14) et un échangeur de chaleur extérieur (13) pendant l'exécution d'une opération de chauffage, le climatiseur (1) comprenant :
un ventilateur extérieur (23) configuré pour souffler l'échangeur de chaleur extérieur (13); et
une unité de commande (4) incluant une partie de détermination (43) configurée pour déterminer si une quantité de formation de givre sur l'échangeur de chaleur extérieur (13) augmente ou non pendant l'exécution de l'opération de chauffage, l'unité de commande (4) étant configurée pour commander une fréquence de fonctionnement du compresseur (11) et une vitesse de rotation du ventilateur extérieur (23),
dans lequel l'unité de commande (4) est configurée pour réduire la vitesse de rotation du ventilateur extérieur (23) lorsque la partie de détermination (43) détermine que la quantité de formation de givre sur l'échangeur de chaleur extérieur (13) est augmentée, **caractérisé en ce que** l'unité de commande (4) est en outre configurée pour exécuter une commande de fonctionnement avec condition de formation de givre pour augmenter la fréquence de fonctionnement du compresseur (11) soit simultanément à la réduction de la vitesse de rotation du ventilateur extérieur (23), soit lorsqu'une dégradation de performance prédéterminée est sensiblement causée après réduction de la vitesse de rotation du ventilateur extérieur (23) et
pour réduire la vitesse de rotation du ventilateur extérieur (23) selon une quantité d'augmentation de la fréquence de fonctionnement du compresseur (11) pendant l'exécution de la commande de fonctionnement avec condition de formation de givre.

2. Climatiseur (1) selon la revendication 1, comprenant en outre :
un premier capteur de température (101) configuré pour détecter une température extérieure ; et
un deuxième capteur de température (102) configuré pour détecter une température de l'échangeur de chaleur extérieur (13),
dans lequel l'unité de commande (4) est configurée pour: surveiller une différence entre une valeur détectée par le premier capteur de température (101) et une valeur détectée par le deuxième capteur de température (102) ; et déterminer que la quantité de formation de givre sur l'échangeur de chaleur extérieur (13) augmente lorsque la différence augmente.

3. Climatiseur (1) selon la revendication 2, comprenant en outre :
un troisième capteur de température (103) configuré pour détecter une température de l'échangeur de chaleur intérieur (15),
dans lequel l'unité de commande (4) est configurée pour surveiller la température de l'échangeur de chaleur intérieur (15) par le biais du troisième capteur de température (103); et augmenter la fréquence de fonctionnement du compresseur (11) selon une quantité de réduction de la température de l'échangeur de chaleur intérieur (15) pendant l'exécution de la commande de fonctionnement avec condition de formation de givre.

4. Climatiseur (1) selon la revendication 3,
dans lequel l'unité de commande (4) inclut des quantités de changement définies de manière préliminaire pour changer la fréquence de fonctionnement du compresseur (11) par étapes, les changements de quantité correspondant aux étapes sur une base un à un, et
la fréquence de fonctionnement du compresseur (11) est configurée pour être augmentée d'une des quantités de changement correspondante requise pour faire passer une étape présente de la fréquence de fonctionnement du compresseur (11) à une étape immédiatement supérieure à la présente étape chaque fois que la température de l'échangeur de chaleur intérieur (15) est réduite d'une quantité prédéterminée.

5. Climatiseur (1) selon la revendication 2, comprenant en outre :
un capteur de pression (111) disposé sur un côté d'évacuation du compresseur (11), le capteur de pression (111) étant configuré pour détecter une pression latérale plus élevée,
dans lequel l'unité de commande (4) est configurée pour: surveiller la pression latérale plus élevée par le biais du capteur de pression (111) ; et augmenter la fréquence de fonctionnement du compresseur (11) selon une quantité de réduction de la pression latérale plus élevée pendant l'exécution de la commande de fonctionnement avec condition de formation de givre.

6. Climatiseur (1) selon la revendication 5,
dans lequel l'unité de commande (4) inclut des quantités de changement définies de manière préliminaire pour changer la fréquence de fonctionnement du compresseur (11) par étapes, les changements de quantité correspondant aux étapes sur une base un à un, et
la fréquence de fonctionnement du compresseur (11) est configurée pour être augmentée d'une des quantités de changement correspondante requise pour faire passer une étape présente de la fréquence de fonctionnement du compresseur (11) à une étape immédiatement supérieure à la présente étape chaque fois que la pression latérale supérieure est réduite d'une quantité prédéterminée.

7. Climatiseur (1) selon l'une des revendications 1 à 6, dans lequel l'unité de commande (4) est configurée pour: compter un temps écoulé après l'activation du compresseur (11) ; et exécuter une commande de fonctionnement de dégivrage pour résoudre la formation de givre sur l'échangeur de chaleur extérieur (13) lorsque le temps écoulé atteint une période de temps prédéterminée pendant l'exécution de la commande de fonctionnement avec condition de formation de givre alors qu'une température d'évaporation du réfrigérant atteint une température prédéterminée.
